# EUROPEAN PATENT APPLICATION

(11) **EP 3 002 175 A1**
(43) Date of publication of application: **06.04.2016**
(21) Application number: 15164279.0
(22) Date of filing: 20.04.2015
(51) Int. Cl.: B62B 7/08, B62B 7/06

(54) **LATCH RELEASE SYSTEM FOR A STROLLER**

(30) Priority: 02.10.2014 US 201462059042 P
(71) Applicant: GRACO CHILDREN'S PRODUCTS INC., Exton, PA 19341 (US)
(72) Inventor: Clark, Aaron, Buford, GA 30519 (US); Tebbe, Jessica, Alpharetta, GA 30022 (US)
(74) Representative: Metten, Karl-Heinz

(57) **Abstract**

A stroller has a frame assembly with left and right frame sides. The frame assembly is foldable between an in-use configuration and a folded configuration. A left latch mechanism is on the left frame side and a right latch mechanism is on the right frame side. Each latch mechanism is movable between a latched position retaining the frame assembly in the in-use configuration and a released position permitting the frame assembly to be folded. A latch release system has a left release element anchored to the right frame side and coupled to the left latch mechanism and a right release element anchored to the left frame side and coupled to the right latch mechanism. Actuating both the left and right release elements with one hand at the same time moves the left and right latch mechanisms to the released position.

## Description

This patent is related to and claims priority benefit of U.S. provisional application Serial No. 62/059,042 filed October 2, 2014. The entire contents of this prior filed provisional application are hereby incorporated herein by reference.

The present invention is generally directed to foldable strollers and more particularly to a latch release system or fold actuator arrangement for a foldable stroller.

Foldable strollers are known in the art. A typical stroller has a frame assembly with multiple components connected at pivot joints that allow the frame to be reconfigured between a compact, folded configuration for storage and a set-up or in-use configuration for normal use. Nearly every stroller in the marketplace today is foldable in some manner. As a result, every one of these foldable strollers also employs some type of latch mechanism or multiple latch mechanisms, typically corresponding to one or more of the pivot or fold joints of the stroller frame. These types of foldable strollers also employ a latch release system or fold actuator or actuator arrangement of some type to operate and release the latch mechanism or multiple latch mechanisms.

A typical stroller has two generally parallel frame sides and a latch mechanism on each side of the frame. The latch mechanisms, when in an in-use position and a latched condition, are configured to retain the stroller frame in the set-up or in-use configuration. Unlatching or releasing the latch mechanisms typically allows the stroller frame assembly to be reconfigured to the folded configuration. The latch release system or fold actuator or actuator arrangement is operated to unlatch the stroller's latch mechanisms to permit the stroller to be reconfigured.

Each frame side on a typical stroller frame assembly has a front leg, a rear leg, and a push arm. The push arms are often joined at their free ends by a transverse handle bar above and behind the toddler seat on the stroller. The frame sides are also connected by one or more transverse cross-members to create a study frame structure. Each frame side often has a latch mechanism generally located at a pivot joint connecting two or more parts of the frame assembly on that frame side. Some strollers have a dedicated latch release or fold actuator on or near each of the fold latches. Each of these fold actuators must be operated independently, requiring two separate and distinct actions by the user. Many strollers instead have a single latch release or fold actuator that can operate both of the frame-side latch mechanisms simultaneously. The latch release or fold actuator is often conveniently located somewhat close to the operator, such as on or near the handle bar. The latch release or fold actuator is operated in order to unlock or release the latch mechanisms so that stroller can be folded.

When the latch release portion or fold actuator of a system or arrangement is positioned on the handle bar, a user may unintentionally contact the fold actuator during normal stroller usage. It is thus possible for a user to inadvertently unlock or release the frame-side latch mechanisms while pushing or maneuvering the stroller. A number of jurisdictions have enacted performance standards to address this issue. Such standards can require a secondary locking mechanism or some independence between the two latch mechanisms in order to prevent inadvertent folding of the stroller during use.

As a result, many strollers also employ a secondary safety locking mechanism of some type, i.e., a secondary button, switch, slider, or the like on the latch release or fold actuator portion of a system or arrangement. The secondary device retains the fold actuator in a latched or locked position to prevent such inadvertent actuation. The secondary locking mechanism must first be pressed, moved, or otherwise actuated by the user before the latch release or fold actuator can be moved to unlatch or release the latch mechanisms.

Adding a secondary safety lock feature to address the problem creates a two-step process for the user in order to fold up a stroller. Graco's FastAction Fold strollers, Graco's FastAction Fold Joggers, and Britax's B-Agile strollers all employ a version of this solution. Another solution has included use of safety straps as a secondary latch device, such as Baby Jogger's City Mini stroller. The strap must first be detached before the user can pull on the fold actuator to fold the stroller. These known solutions require additional steps to be taken by the user each time they wish to initiate the fold.

In one preferred embodiment according to the teachings of the present invention, a stroller has a frame assembly with a left and a right frame side. The frame assembly is foldable between an in-use configuration and a folded configuration. A left latch mechanism is on the left frame side and a right latch mechanism is on the right frame side. Each latch mechanism is movable between a latched position retaining the frame assembly in the in-use configuration and a released position permitting the frame assembly to be reconfigured to the folded configuration. A latch release system has a left release element anchored to the right frame side and coupled to the left latch mechanism and a right release element anchored to the left frame side and coupled to the right latch mechanism. Actuating both the left and right release elements with one hand at the same time moves the left and right latch mechanisms to the released position.

In another preferred embodiment of the invention, the left and right release elements each can include a strap or a strap portion.

In another preferred embodiment of the invention, the left and right release elements can be actuated independently or separately, which thereby actuates the left and right latch mechanisms independently or separately.

In another preferred embodiment of the invention, the left and right release elements can be anchored to a right and left side frame leg, respectively, of the frame assembly.

In another preferred embodiment of the invention, portions of the left and right release elements can overlap one another over or across a portion of a seat on the stroller.

In another preferred embodiment of the invention, the left and right release elements can each include a strap or strap portion that can overlap one another over or across a portion of a seat on the stroller.

In another preferred embodiment of the invention, central portions of the left and right release elements can be positioned over or across a top side of a seat bottom on the stroller.

In another preferred embodiment of the invention, the left and right release elements can be actuated by pulling with the one hand on a central portion of each of the left and right release elements.

In another preferred embodiment of the invention, at least segments of the left and right release elements can be covered by soft goods on a part of a seat on the stroller. The segments can be accessed by moving the soft goods to expose central portions of the segments of the left and right release elements.

The invention further relates to a method of folding a stroller having a frame assembly with left and right frame sides and respective left and right latch mechanisms includes grasping portions of a left release element and a right release element with one hand. The left release element is anchored to the right frame side and coupled to the left latch mechanism and the right release element is anchored to the left frame side and coupled to the right latch mechanism. The method includes actuating both the left and right release elements with the one hand at the same time to move the left and right latch mechanisms from a latched position retaining the frame assembly in an in-use configuration to a released position. The method includes then reconfiguring the frame assembly to a folded configuration.

In a preferred embodiment of the method according to the invention, the step of grasping can include grasping a central portion of each of the left and right release elements with the one hand.

In another preferred embodiment of the method according to the invention, the step of grasping can include grasping a strap or strap portion of each of the left and right release elements with the one hand.

In another preferred embodiment of the method according to the invention, the step of actuating can include pulling a portion of each of the left and right release elements upward away from a seat bottom of a seat on the stroller.

In another preferred embodiment of the invention, the method can include the step of moving soft goods on the stroller to expose a portion or a central portion of each of the left and right release elements.

In another preferred embodiment of the invention, the method can include the step of moving soft goods covering the portions or central portions of the left and right release elements on a top side of a seat bottom on the stroller.

In another preferred embodiment according to the teachings of the present invention, a stroller has a frame assembly with left and right frame sides. The frame assembly is foldable between an in-use configuration and a folded configuration. A left latch mechanism is on the left frame side and a right latch mechanism is on the right frame side. Each latch mechanism is movable between a latched position retaining the frame assembly in the in-use configuration and a released position permitting the frame assembly to be reconfigured to the folded configuration. A left release strap is anchored to the right frame side and coupled to the left latch mechanism and a right release strap is anchored to the left frame side and coupled to the right latch mechanism. Pulling both the left and right release straps at the same time repositions the left and right latch mechanisms to the released position.

In another preferred embodiment of the invention, the left and right release elements can be actuated independently or separately, which thereby actuates the left and right latch mechanisms independently or separately.

In another preferred embodiment of the invention, the left and right latch mechanisms can be configured to retain the frame assembly in the folded configuration. The left and right release elements can be actuated to move the left and right latch mechanisms to the released position, thereby allowing the frame assembly to be returned or moved to the in-use configuration. This arrangement can be employed on any of the above disclosed or below noted strollers or methods according to the present invention.

Objects, features, and advantages of the present invention will become apparent upon reading the following description in conjunction with the drawing figures, in which:
FIG. 1 shows a front view of one example of a portion of a stroller including a latch release system or fold actuator arrangement constructed in accordance with the teachings of the present invention;
FIG. 2A and 2B show a simplified schematic representation of a generic latch mechanism for the portion of the stroller of FIG. 1 and in a latched condition and an unlatched condition, respectively;
FIG. 3 shows a side view of the portion of the stroller of FIG. 1 in the in-use configuration;
FIG. 4 shows a front perspective view of the portion of the stroller of FIG. 1 as a user grasps and actuates the latch release system or fold actuator arrangement;
FIG. 5 shows the portion of the stroller of FIG. 4 but with the stroller frame assembly beginning to be folded from the in-use configuration;
FIG. 6 shows the portion of the stroller of FIG. 5 but folded further toward the folded configuration;
FIG. 7 shows a side view of another example of a portion of the stroller similar to that shown in FIGS. 1 and 3, but foldable in a different direction toward the folded configuration;
FIG. 8 shows the portion of the stroller of FIG. 1 and depicts the latch release system or fold actuator arrangement hidden under soft goods on a seat of the stroller;
FIG. 9 shows the portion of the stroller of FIG. 1 and depicts the latch release system or fold actuator arrangement with an optional indicator sleeve.

The disclosed latch release system or fold actuator arrangement (hereinafter the "latch release system") solves or improves upon one or more of the above-noted and/or other problems and disadvantages with prior known such systems and arrangements. The disclosed latch release system employs two release elements, one for each of two frame-side latch mechanisms on a stroller. Each release element independently operates or releases a different one of the latch mechanisms. The two release elements cross or overlap one another across the width of the stroller frame. Each release element is anchored to a different frame side and crosses over and is coupled to the latch mechanism on the opposite frame side. The two release elements can be grasped by one hand of a user and operated simultaneously to release both latch mechanisms at the same time, even though the two release elements are independent of one another. This simulates a one-step release process, though the two release elements and two release mechanisms are independent. These and other objects, features, and/or advantages of the disclosed latch release system will become apparent to those having ordinary skill in the art upon reading this disclosure.

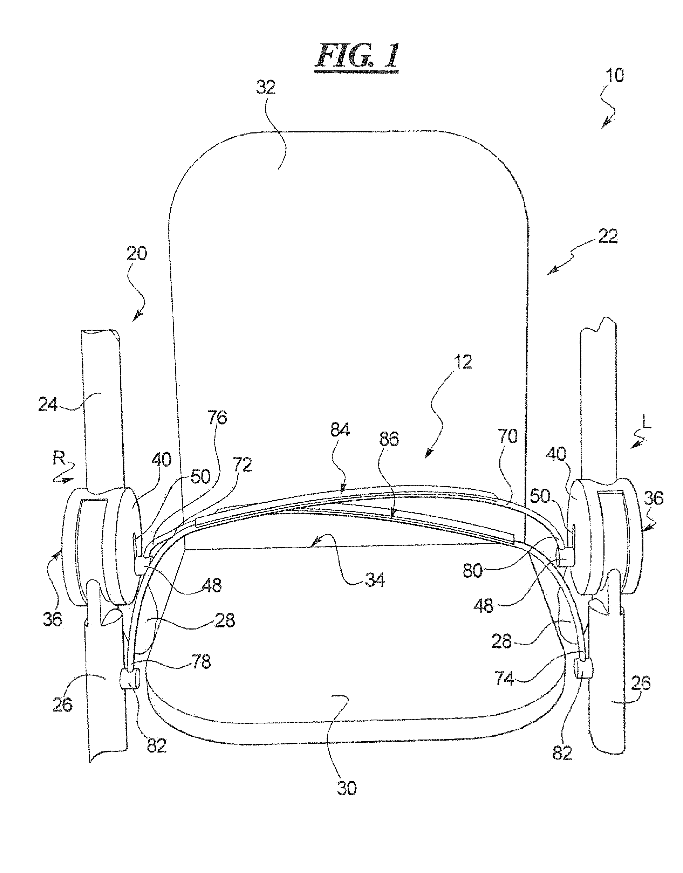

Turning now to the drawings, FIG. 1 shows one example of part of a generic stroller 10 including a latch release system 12 constructed according to the teachings of the present invention. For ease of description, the stroller 10 in FIG. 1 is depicted having only portions of a frame assembly 20 and a seat assembly 22. In this example, the frame assembly 20 generally has a left side (L) and a right side (R). A typical frame assembly 20 would also include a front end and a rear end and front and rear wheels, as is known in the art, though these aspects are not illustrated or described in detail herein. The frame assembly 20 is shown in several of the drawings without any soft goods for a seat, a canopy, a basket, or any other component, though a typical stroller would have soft goods covering at least portions of the stroller 10, seat assembly 22, and/or frame assembly 20. In general, the typical frame assembly 20 would have a number of subassemblies or subcomponents and/or frame elements or components. These are typically interconnected to form the frame assembly 20. These subassemblies and components can include, for example, a handle assembly with a left and a right push arm 24, a left and a right front leg 26, and a left and a right rear leg 28. These are again shown herein only in part, for ease of description and illustration.

The seat assembly 22 generally would have a seat bottom 30 and a seat back 32. The bottom end of the seat back 32 and the back end of the seat bottom 30 can be adjacent one another, as shown, defining a seat bight region 34. Often, the seat back 32 and seat bottom 30 may be joined or coupled to one another at the seat bight region 34. The seat assembly 22, including the seat bottom 30, can be configured to be suspended from or between the left and right frame sides L and R or supported upon or by the frame sides. The seat back 32 and seat bottom 30 can instead include frame-like elements that support a sling-type fabric seat or, as shown in this example, the seat back 32 and seat bottom 30 can be supportive panels, to be covered by soft goods.

The various features and aspects of the stroller 10, seat assembly 22, and frame assembly 20 can vary considerably from the specific example disclosed and described herein. In the disclosed example, the frame assembly 20 will have left and right frame sides L and R in order to accommodate the disclosed latch release system 12. Other stroller, seat, and frame components and arrangements can be implemented within this basic frame assembly structure.

The particular structure of the frame assembly 20 and the seat assembly 22 can vary considerably from the example disclosed and described herein. In one example, the left and right frame sides L and R of the frame assembly 20 can each be a mirror image of the other. The frame assembly 20 and seat assembly 22 as disclosed herein can include other or different components and can take on other, shapes, configurations, and constructions. The disclosed latch release system 12 can be used on a wide variety of different and alternative strollers, as will become apparent to those having ordinary skill in the art upon reading this disclosure.

In one example, the left and right push arms 24 can be connected at their respective top ends by a handle bar (not shown). The push arms 24 in this example each have a lower end that is pivotally connected to a respective left or right latch mechanism 36, one carried on each frame side L and R. The push arms 24 are shown in the in-use configuration in FIG. 1 and extend upward and rearward and toward the handle bar. In the disclosed example of the present invention, each latch mechanism 36 is located at and assists in defining a fold or pivot joint P on its respective frame side L or R for the frame assembly 20. In other examples, the latch mechanisms can be separate from the fold or pivot joints but can be constructed to function in conjunction therewith to permit or prevent folding of the stroller 10 about the fold or pivot joints.

The front legs 26 each have an upper end that may be pivotally or fixedly connected to the respective latch mechanism 36. The front legs 26 can also extend forward and downward and can carry one or more front wheels (not shown) at their respective lower ends. Similarly, the rear legs 28 each have an upper end that may be pivotally or fixedly connected to the respective latch mechanism 36. The rear legs 28 can also extend rearward and downward and can carry one or more rear wheels (not shown) at their respective lower ends. One or the other of the front legs 26 or the rear legs 28 can be pivotable relative to the other so that the front and rear legs may collapse closer to one another in the folded configuration. The other of the front or rear legs may then be fixed to part of the pivot joint P or latch mechanism 36 so as to allow such relative folding action between the front and rear legs. In another example, both the front and rear legs can be pivotable about the fold or pivot joints P and/or latch mechanisms 36.

A majority of strollers have a more conventional four post or four wheeled construction. However, some strollers, such as jogging strollers or more expensive up-market strollers may have a tripod or three wheeled construction or some other non-conventional configuration. The disclosed latch release system 12 may function equally well with either a three- or four-wheel stroller construction or with other non-conventional stroller configurations. The disclosed latch release system 12 is not intended to be limited to only a more conventional four post type arrangement.

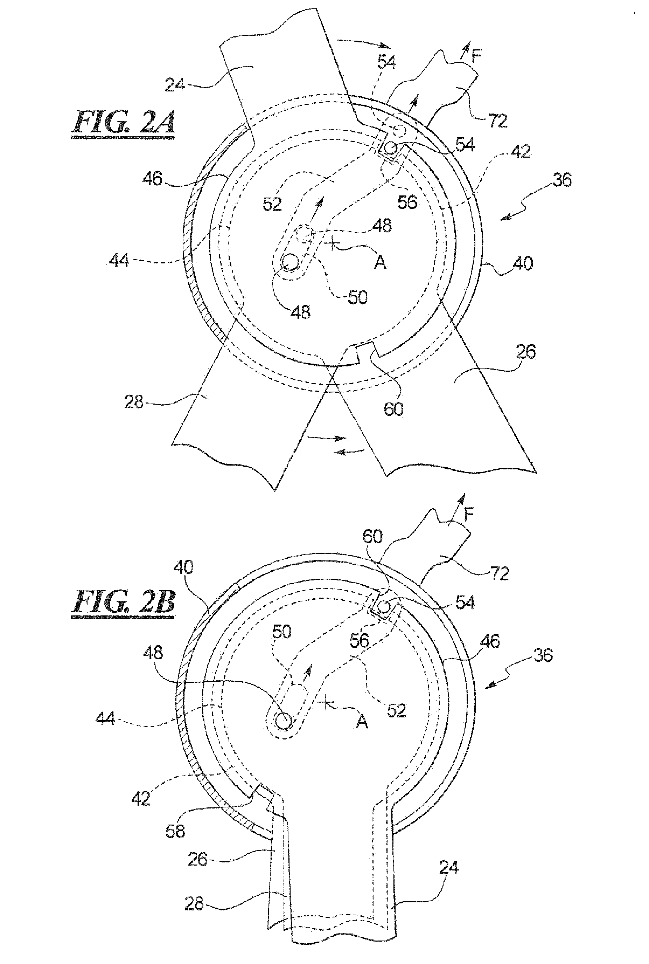

Figs. 2A and 2B depict a generic representation of one of the latch mechanisms 36. The configuration and construction of the latch mechanisms 36, however, can also vary considerably from the disclosed example. Also as mentioned above, the latch mechanisms can be an integral part of the fold or pivot joints P or can be separate from the pivot or fold joints and yet cooperate with the joints to latch and retain the stroller 10 in at least the in-use configuration. In general, the latch mechanisms 36 can have components that, in a latched or locked position, will block, hold, or retain the frame assembly 20 in an in-use configuration. The components of the latch mechanisms 36 can be moved by the latch release system 12 from the latched or locked position to an unlocked, unlatched, or released position. In this position, the latch mechanisms 36 will permit the frame assembly components, such as the front legs 26, the push arms 24, and the rear legs 28 to be folded up to a folded configuration. The latch mechanisms 36 may include spring biased shuttles, sliders, latch pins, and/or the like that move when actuated, as is known in the art.

As shown in FIG. 2A, each generic latch mechanism 36 is depicted having a housing 40 that can house one or more pivotable discs. A first disc 42 can be fixed to the upper end of the respective front leg 26. A second disc 44 can be fixed to the lower end of the respective push ann 24. A third disc 46 can be affixed to the upper end of the rear leg 28. Each of the discs 42, 44, 46 in this generic example can lie side by side adjacent one another and can be pivotable about a common pivot axis A through the discs and the housing 40. A latch boss 48 can protrude through a slot 50 in a wall of the housing 40. The boss 48 can be carried on and protrude from a latch shuttle 52 and the shuttle can be slidably held within the housing 40. A latch pin 54 can also protrude from an end of the latch shuttle 52 spaced from the boss 48.

The disc 42 on the front leg 26 can have a notch 56 in the perimeter edge of the disc. The disc 44 on the push arm 24 can have a latch notch 58 at one location in the perimeter edge of the disc and an optional fold notch 60 at another location in the perimeter edge spaced from the latch notch. As shown in FIG. 2A, the notch 56 in the disc 42 and the latch notch 58 in the disc 44 can be aligned with one another when the stroller 10 is in the in-use configuration and the latch mechanism is in a latched condition as shown. The latch pin 54 can reside in both notches to retain the stroller in the in-use configuration and the latch mechanism 36 in the latched condition. The shuttle 52 can be biased by a spring (not shown) toward the notches.

The latch pin 54 can be withdrawn and disengaged from both the notch 56 and the latch notch 58 in the direction of the arrow F, as described below, by using the latch release system 12. When this occurs, the push arm 24 and disc 44 are free to rotate relative to the disc 42 and the disc 46. Though not shown herein, as is known in the art, the frame assembly 20 can include links and frame elements that interconnect the various frame parts, including the push arms 24, front legs 26, and/or rear legs 28. The links and frame elements can be configured and arranged to move relative to one another and to simultaneously move portions of both the left L and right R frame assembly from the in-use configuration to the folded configuration by moving the push arms 24.

FIG. 2B shows the latch mechanism 36 of FIG. 2A but in a folded condition after the push ann 24 has been rotated forward about the pivot axis A of the latch mechanism 36. In this condition, the latch pin 54 can seat in the notch 56 of the front leg disc 42 and in the fold notch 60 of the push arm disc 44. This optional arrangement will retain the stroller 10 in the folded configuration unless and until the latch mechanisms 36 are again released using the latch release system 12. The disc 46 on the rear leg 28 in this example can have a smaller diameter thus requiring no notches align with the other disc notches. Instead, the rear leg 28 and disc 46 can be rotated via the links and frame elements, as noted above, relative to other parts when the push arms 24 are moved.

As noted above, the latch mechanisms 36 as described herein are generic in nature and can vary considerably from the example shown and described. The construction of the latch mechanisms 36 is not intended to limit the scope of the present invention. The latch mechanisms 36 need only have a part (such as the boss 48) that is moved or actuated by moving the latch release system 12 as described below.

As shown in FIG. 1, the latch release system 12 in the disclosed example according to the present invention has two release elements including a left release actuator or element 70 and a right release actuator or element 72. Each release element 70, 72 has two ends and each extends across or traverses the frame assembly 20 between the left and right frame sides L and R. In this example, the two release elements are positioned extending over a top side of the seat bottom 30. One end 74 of the left release element 70 is anchored or fixed to a portion of the right side R of the frame assembly 20. In this example, the left release element is anchored to the right front leg 26. The other end 76 of the left release element 70 is connected to the latch boss 48 protruding from the left side latch mechanism 36 in this example. Likewise, one end 78 of the right release element 72 is anchored or fixed to a portion of the frame assembly, i.e., the left front leg 26. The other end 80 of the right release element 72 is connected to the latch boss 48 protruding from the right latch mechanism 36.

In one example, the two release elements 70, 72 can be left and right release straps or tethers made from fabric webbing or the like. In other examples, the release elements 70, 72 can be wires, cables, cords, ropes, or the like. In still other examples, the release elements can each have at least a central strap or webbing portion if not formed of one contiguous material over their entire length. The release elements can also have sturdier or non-flexible material, such as metal, different from the material of the central portions. The sturdier ends can be connected to the frame assembly 20 and latch mechanisms 36. A reverse construction for the release elements is also possible, with a sturdier material central portion between a more flexible, different material at the ends. The anchored ends 74, 78 of the release elements 70, 72 can be fastened to the front legs 26, the rear legs 28, or some other frame part, and can be anchored using any suitable fasting device or method. In this example, the anchored ends 74, 78 are fixed to the respective front legs 26 using studs 82 attached to the legs. The studs 82 can have a crimped region that holds the ends 74, 78 of the release elements 70, 72 to the studs.

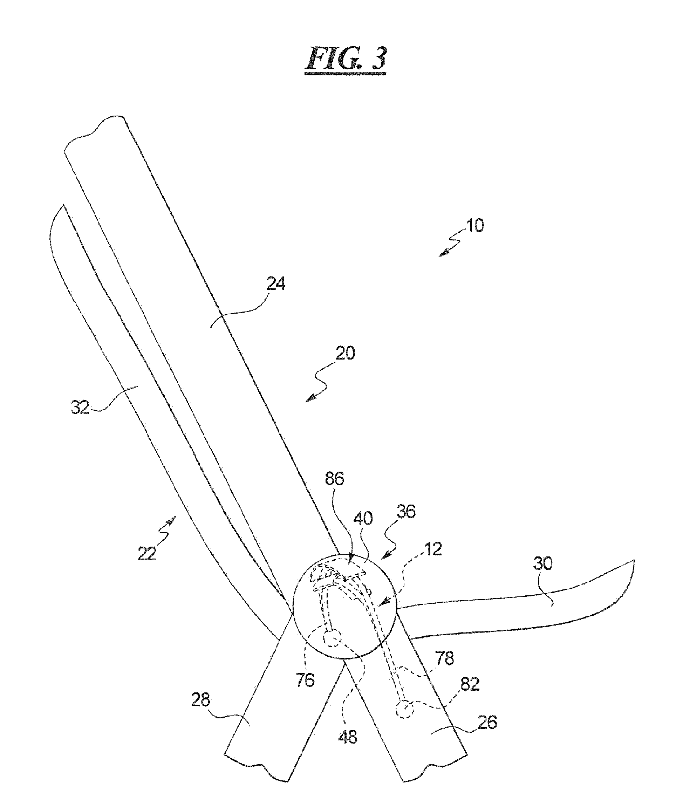

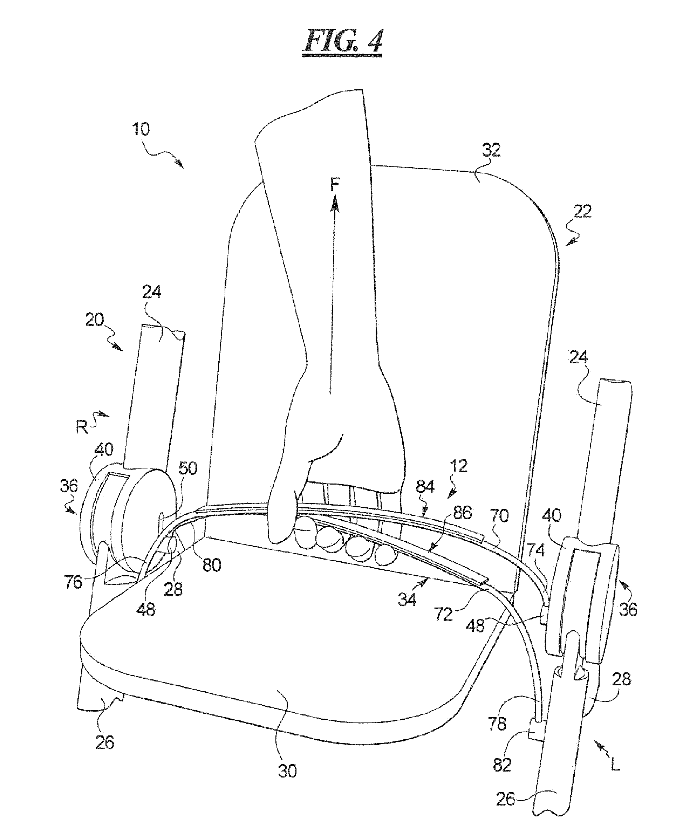

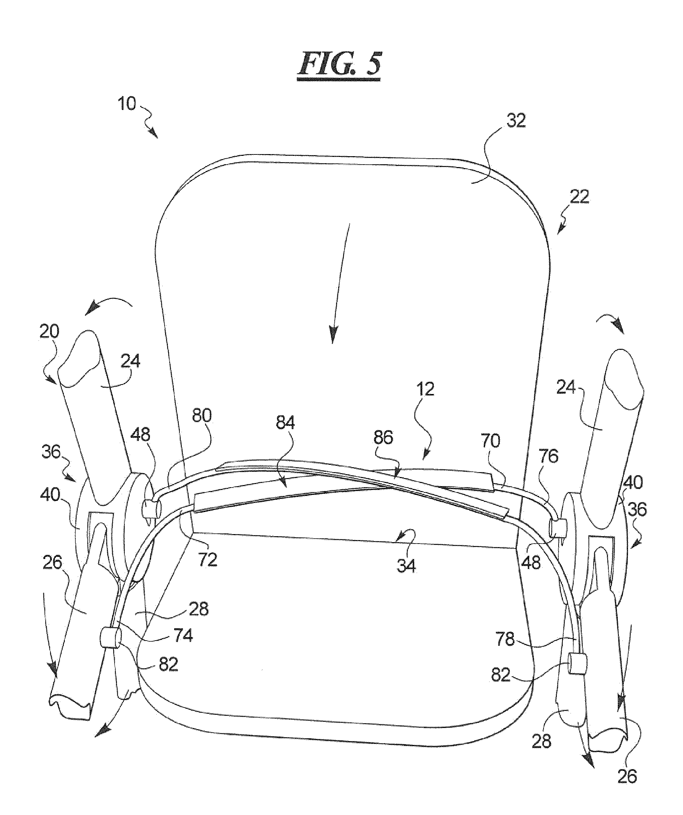

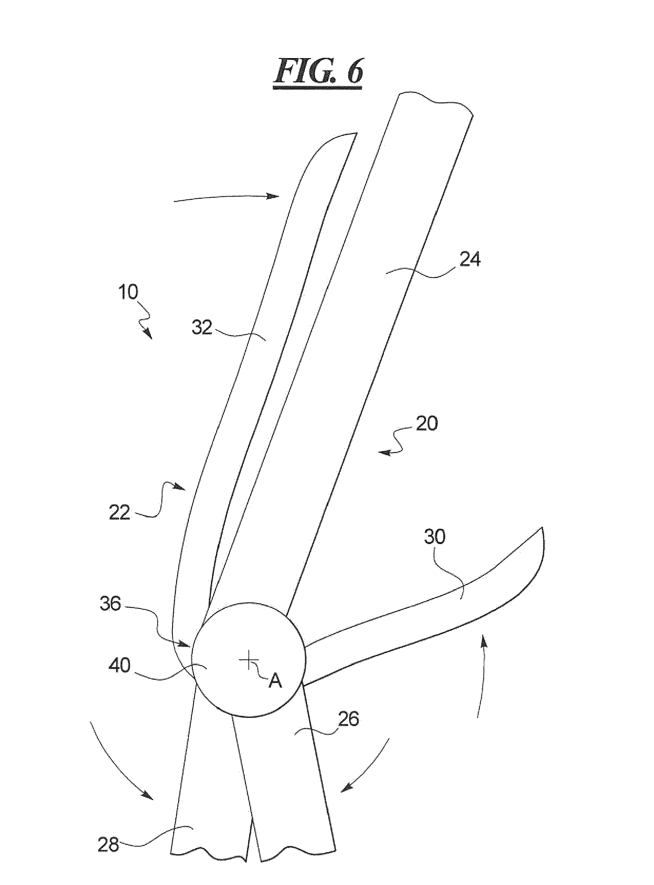

In this example, each release element 70, 72 is independent of the other and each latch mechanism 36 is independent of the other. However, the release element 70 has a central portion or region 84 between the corresponding ends 74, 76. Likewise, the release element 72 has a central portion or region 86 between the corresponding ends 78, 80. The central portions 84, 86 of the release elements 70, 72 are closely adjacent one another and overlap one another over the top side of the seat bottom 30. FIG. 3 shows a side view of the stroller 10 of FIG. 1 in the in-use configuration. FIG. 4 shows a user grasping both of the release elements 70, 72 at the same time. Pulling up on the central portions 84, 86 of the release elements 70, 72 in the direction of the arrow F pulls up on the bosses 48 on each of the latch mechanisms 36. As described above with respect to FIGS. 2A and 2B, pulling on the bosses 48 releases the latch mechanisms 36, which permits the push arms to be moved in order to fold the frame assembly 20. FIGS. 5 and 6 show the frame assembly 20 and stroller 10 being folded from the in-use configuration of FIGS. 1 and 3 toward the folded configuration (as represented in FIG. 2B), once the release mechanisms 36 are unlatched. The aforementioned can be accomplished in one step even though the two release elements 70, 72 and corresponding latch mechanisms 36 are independent of one another.

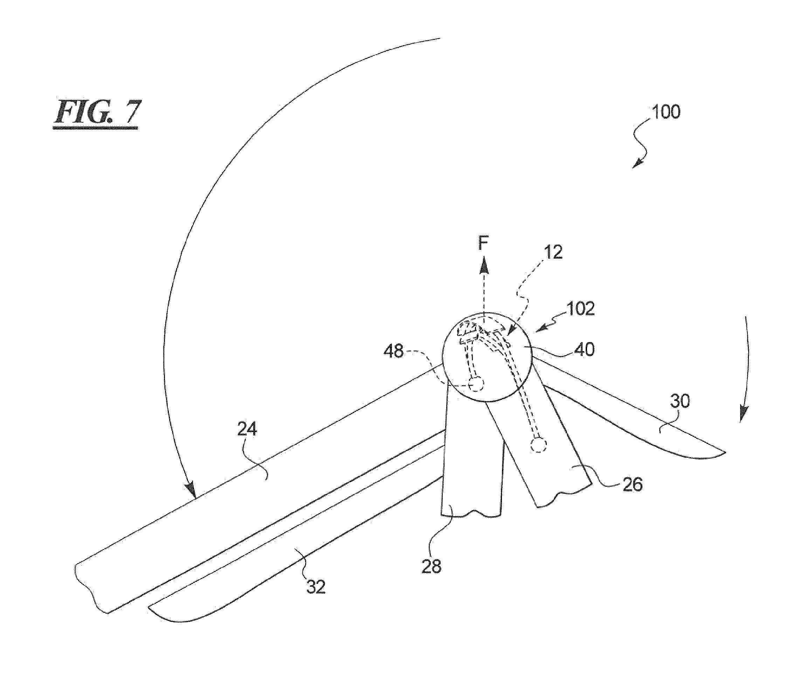

As shown in FIGS. 5 and 6, the stroller 10 and frame assembly 20 is in the process of being folded to the folded configuration. In this example, the rear legs 28 are drawn toward the front legs 26 and the push arms 24 are folded forward and downward toward the front legs. Likewise, the seat back 32 is folded forward and downward onto the seat bottom 30, such as on the stroller 10 of the disclosed example of the present invention. However, other folded configurations are certainly possible. In one example depicted in FIG. 7, a stroller 100 is shown partly folded. The stroller 100 has a latch mechanism 102 configured to allow the push arms 24 to fold rearward and downward instead of forward. In this example, the seat back 32 may also be configured to fold rearward and downward. The present invention is not intended to be limited to a particular folded configuration for the stroller 10 or the frame assembly.

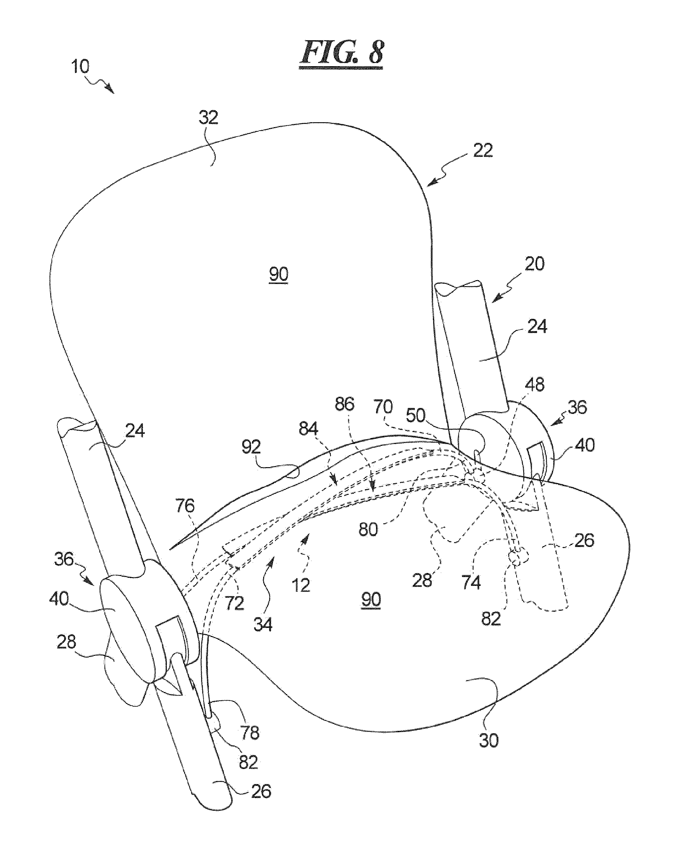

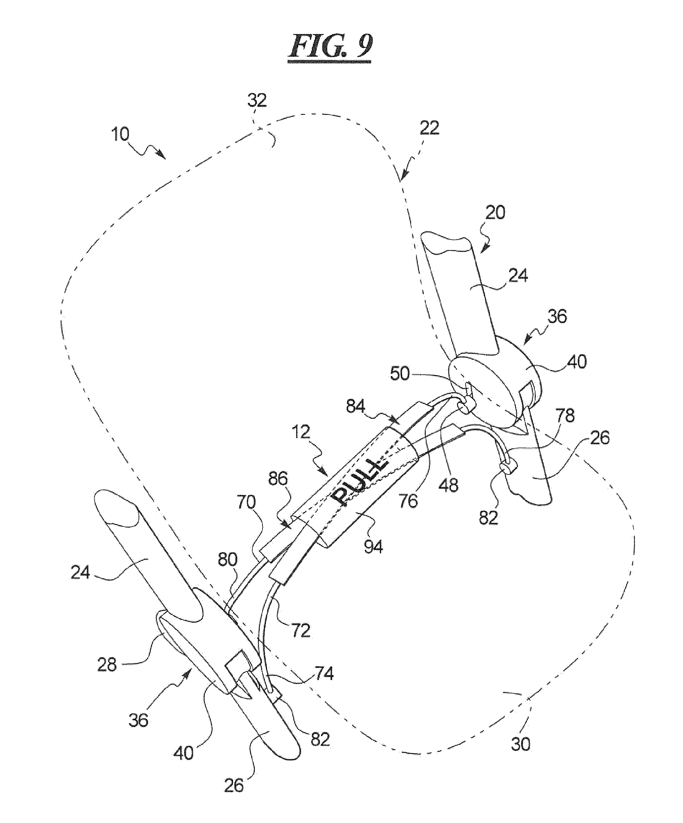

FIG. 8 shows that the latch release system 12, or at least the central portions 84, 86 of the release elements 70, 72, can be hidden by and under soft goods 90 covering the seat bottom 30 and seat back 32. A slit 92 in the soft goods can be provided, such as at the seat bight region 34, to provide access to the release elements 70, 72 as needed, but only when the seat assembly 22 is unoccupied. FIG. 9 shows that a sleeve 94 can be provided over both of the release elements 70, 72, or at least the central portions 84, 86 of the release elements, to aid the user in grasping both of the release elements at the same time. The sleeve 94, however, does not otherwise join the two elements together, leaving the two release elements 70, 72 independent of one another. The sleeve 94 can be provided in a highly visible color, such as red, and/or can be provided with another visual cue, such as the word PULL to indicate to a user how to actuate the latch release system 12.

The disclosed latch release system 12, and particularly the release elements 70, 72, can vary from the example disclosed and described herein. The release elements of the system need not be straps, but instead can be some other element anchored to one side of the frame assembly 20 and coupled to the opposite latch mechanism 36. The release elements can be made from rope, fabric, leather, animal hide, webbing material, woven materials, plastic, composites, metal, or the like, and can be tethers, wires, rods, sheathed cables, or the like. The release elements can also include straps or strap portions along with other portions, segments, and/or materials. A label indicating the purpose of the system can be included on one or both of eh release elements, as represented in FIG. 9. The anchoring devices, i.e., the studs that fix the one ends of the release elements to the frame assembly can vary as well. The release elements can be anchored using anchoring rings, bolts, hooks, rivets, slots in the frame parts, welds, or the like. Likewise, the other ends of the release elements can be coupled directly or indirectly to portions of the latch mechanisms 36, such as to the latch bosses or the shuttles, etc. by any similar and/or suitable means as well.

The latch mechanisms 36 can be configured to optionally lock or latch the stroller in the folded configuration as noted above, once the frame assembly is completely folded up. The latch release system can thus be optionally configured and positioned to require or allow a user to pull on the release elements in order to again unlock or release the latch mechanisms to allow unfolding of the stroller. However, the stroller can be configured so that there is no latching or locking of the frame assembly in the folded configuration. The latch release system can also be configured so that the release elements are pushed instead of pulled, or pulled in different directions than in the upward direction away from the seat bight region as in the disclosed example.

The disclosed latch release system or fold actuator arrangement utilizes at least two locking mechanisms of any suitable type, one on each of the left and right frame sides on the stroller. The disclosed system or actuator also employs two separate latch release elements, i.e., the straps in this example. The two release elements are independent of one another and thus have no physical connection. However, the two release elements can be actuated together with one hand in the same manner as a single strap or tether. By pulling upward on the two independent release elements at the same time, each latch mechanism can be released substantially simultaneously with the other, even though the actions are not directly connected through a common or physical link.

The disclosed latch release system or fold actuator arrangement offers consumers and caregivers the convenience of a single-action, one-hand fold. The disclosed system or actuator does so while also meeting the compliance requirements in multiple jurisdictions, which often require that multiple latching mechanisms operate independently of each other.

Examples of components, arrangements, features, and aspects of a stroller and a latch release system or fold actuator arrangement are disclosed herein using only a limited number of examples of the possible combinations of those components, arrangements, features, and aspects. However, these components, arrangements, features, and aspects may be used in different combinations including one, more, or fewer of the components, arrangements, features, and aspects than the disclosed examples according to the present invention.

Consumers are known to prefer the simplicity and convenience of a one-step or one-action latch release system or fold actuator that can be actuated with one hand. The disclosed latch release system or fold actuator meets the secondary latching requirements and standards that exist today while at the same time provides the convenience of one-step and one-hand actuation. In one example, the disclosed latch release system or fold actuator arrangement has components that independently connect to at least two different latch mechanisms of the stroller. The components, however, can be actuated at the same time to release the at least two latch mechanisms. The disclosed latch release system or fold actuator arrangement lies under the occupant of the stroller seat during use and thus cannot be inadvertently actuated by either the seat occupant or the caregiver during normal use of the stroller, particularly to accidentally release each of the at least two or more latch mechanisms at the same time. The disclosed latch release system or fold actuator arrangement is configured to comply with current safety standards.

Although certain foldable strollers, latch release systems (fold actuator arrangements), and components, arrangements, features and aspects have been described herein in accordance with the teachings of the present invention, the scope of coverage of this patent is not limited thereto. On the contrary, this patent covers all embodiments of the teachings of the invention that fairly fall within the scope of permissible equivalents.

## Claims

1. A stroller comprising:
a frame assembly having left and right frame sides, the frame assembly foldable between an in-use configuration and a folded configuration;
a left latch mechanism on the left frame side and a right latch mechanism on the right frame side, each movable between a latched position retaining the frame assembly in the in-use configuration and a released position permitting the frame assembly to be reconfigured to the folded configuration; and
a latch release system having a left release element anchored to the right frame side and coupled to the left latch mechanism and a right release element anchored to the left frame side and coupled to the right latch mechanism,
wherein actuating both the left and right release elements with one hand at the same time moves the left and right latch mechanisms to the released position.

2. The stroller according to claim 1, wherein
the left and right release elements each include a strap portion.

3. The stroller according to claim 1 or 2, wherein
the left and right release elements are anchored to a right and left side frame leg, respectively, of the frame assembly.

4. The stroller according to one or more of any of claims 1 to 3, wherein
portions of the left and right release elements overlap one another over a portion of a seat on the stroller.

5. The stroller according to claim 4, wherein
the left and right release elements each include a strap portion.

6. The stroller according to claim 4 or 5, wherein
central portions of the left and right release elements are positioned over a top side of a seat bottom of the seat.

7. The stroller according to one or more of any of claims 1 to 6, wherein
the left and right release elements are actuated by pulling with one hand on a central portion of each of the left and right release elements.

8. The stroller according to one or more of any of claims 1 to 7, wherein
at least segments of the left and right release elements are covered by soft goods on a part of a seat on the stroller, and wherein the segments are accessible by moving the soft goods to expose central portions of the segments of the left and right release elements.

9. A method of folding a stroller, in particular a stroller according to one or more of any of claims 1 to 8, having a frame assembly with left and right frame sides and respective left and right latch mechanisms, the method comprising:
grasping portions of a left release element and a right release element with one hand, the left release element anchored to the right frame side and coupled to the left latch mechanism and the right release element anchored to the left frame side and coupled to the right latch mechanism;
actuating both the left and right release elements with the one hand at the same time to move the left and right latch mechanisms from a latched position retaining the frame assembly in an in-use configuration to a released position; and
reconfiguring the frame assembly to a folded configuration.

10. The method according to claim 9, wherein
the step of grasping includes grasping a central portion of each of the left and right release elements.

11. The method according to claim 9 or 10, wherein
the step of grasping includes grasping a strap portion of each of the left and right release elements.

12. The method according to one or more of any of claims 9 to 11, wherein
the step of actuating includes pulling with the one hand a portion of each of the left and right release elements upward away from a seat bottom of a seat on the stroller.

13. The method according to one or more of any of claims 9 to 12, further comprising
the step of moving soft goods on the stroller to expose the portions of the left and right release elements otherwise hidden by the soft goods.

14. The method according to claim 13, wherein
the step of moving soft goods includes moving soft goods covering a central portion of each of the left and right release elements on a top side of a seat bottom on the stroller.

15. A stroller, in particular according to one or more of any of claims 1 to 8, comprising:
a frame assembly having left and right frame sides, the frame assembly foldable between an in-use configuration and a folded configuration;
a left latch mechanism on the left frame side and a right latch mechanism on the right frame side, each movable between a latched position retaining the frame assembly in the in-use configuration and a released position permitting the frame assembly to be reconfigured to the folded configuration; and
a left release strap anchored to the right frame side and coupled to the left latch mechanism and a right release strap anchored to the left frame side and coupled to the right latch mechanism, in particular a latch release system having a left release strap anchored to the right frame side and coupled to the left latch mechanism and a right release strap anchored to the left frame side and coupled to the right latch mechanism,
wherein pulling both the left and right release straps at the same time repositions the left and right latch mechanisms to the released position.
